# EUROPÄISCHE PATENTANMELDUNG

(11) **EP 2 030 671 A1**
(43) Veröffentlichungstag der Anmeldung: **04.03.2009**
(21) Anmeldenummer: 07016699.6
(22) Anmeldetag: 25.08.2007
(51) Int. Cl.: B01D 53/52, B01D 53/58, B01D 53/14, C10K 1/10, C10L 3/10

(54) **Verfahren und Anlage zur Reinigung von Gas**

(71) Anmelder: Kopf Klärschlammverwertungs-GmbH & Co. KG, 72172 Sulz-Bergfelden (DE)
(72) Erfinder: Christian, Burgbacher, 72171 Sulz am Neckar (DE); Markus, Kleinhappl, 8160 Weiz (AT); Marcel, Huber, 6403 Flaurling (AT); Christian, Roschitz, 8020 Graz (AT); Michael, Gaiffi, 72160 Horb (DE)
(74) Vertreter: Späth, Dieter

(57) **Zusammenfassung**

Die Erfindung betrifft ein Verfahren und eine Anlage zur Reinigung von Gas, insbesondere Synthesegas aus der Vergasung von Klärschlamm. Die Erfindung schlägt vor, Schwefelwasserstoff und Ammoniak nacheinander in zwei Gaswäschern (52,54) aus dem Gas auszuwaschen. Kondensat, welches direkt oder indirekt aus dem Gas gewonnen wird, ist gebraucht um Schwefelwasserstoff und/oder Ammoniak auszuwaschen.

## Beschreibung

Die Erfindung betrifft ein Verfahren und eine Anlage zur Reinigung von Gas mit den Merkmalen der Oberbegriffe der Ansprüche 1 und 8. Es können auch Gase, also ein Gasgemisch gereinigt werden. Insbesondere betrifft die Erfindung ein Verfahren und eine Anlage zur Reinigung von sog. Synthesegas oder Biogas, das durch thermische oder biologische Verwertung von insbesondere Klärschlamm oder auch sonstiger Biostoffe oder nachwachsender Rohstoffe beispielsweise durch Vergasung, Pyrolyse oder Vergärung gewonnen wird. Das Gas ist brennbar und kann einer thermischen Verwertung zugeführt werden. Es kann beispielsweise zum Betrieb eines Gasmotors zur Stromerzeugung verwendet oder zu Heizzwecken verbrannt werden. Die thermische Verwertung des gereinigten Gases, also dessen Nutzung beispielsweise zur Wärme- und/oder Stromerzeugung, ist von der thermischen Verwertung der Ausgangsstoffe wie beispielsweise Klärschlamm, sonstiger Biostoffe oder nachwachsender Rohstoffe zur Gewinnung des Gases zu unterscheiden.

Die Vergasung von Klärschlamm ist an sich bekannt. Die Patentanmeldung EP 1 112 970 A1 offenbart ein Verfahren und eine Anlage zur Vergasung von Klärschlamm. Der Klärschlamm wird in einen Vergaser eingebracht und dort durch Erhitzung unter Luft- bzw. Sauerstoffmangel thermisch zersetzt. Es entsteht ein brennbares Gas- oder Gasgemisch, das Synthesegas, das zur Strom-und/oder Wärmeerzeugung verwendet werden kann.

Vorzugsweise wird der Klärschlamm vor seiner Vergasung getrocknet, wobei in dem zu vergasenden Klärschlamm immer noch Feuchte enthalten sein kann. Der Klärschlamm wird der Vergasung vorzugsweise in festem Zustand, beispielsweise als Granulat zugeführt und nicht als Schlamm im eigentlichen Sinn. Trotzdem wird das zu vergasende Gut zur Erläuterung der Erfindung als Klärschlamm bezeichnet werden.

Als Schadstoffe enthält das durch die Vergasung gewonnene Synthesegas u. a. Teer, Ammoniak und Schwefelwasserstoff. Zur Reinigung von Teer wird in der bekannten Anlage und nach dem bekannten Verfahren das Synthesegas auf eine Temperatur gekühlt, bei der der Teer kondensiert. Anschließend wird das Synthesegas durch den zu vergasenden Klärschlamm geleitet, der als Filter wirkt und das Synthesegas vom Teer reinigt. Der aus dem Synthesegas gefilterte Teer wird mit dem Klärschlamm dem Vergaser zugeführt und vergast. Im Vergaser wird der Teer verbrannt und liefert dabei Wärme für die thermische Zersetzung des Klärschlamms und/oder der Teer wird ebenfalls in brennbares Gas, d. h. Synthesegas zersetzt.

Nach dem Ausfiltern des Teers verbleiben Ammoniak und Schwefelwasserstoff als Schadstoffe im Synthesegas. Bei einer thermischen Verwertung des Synthesegases würden der Ammoniak und der Schwefelwasserstoff zu Stick- und Schwefeloxiden reagieren, die als Luftschadstoffe im Abgas im günstigsten Fall unerwünscht, jedenfalls emissionsrechtlich problematisch und im weniger günstigen Fall unzulässig sind. Außerdem verursacht Schwefeldioxid erhebliche Korrosionsprobleme, so dass eine thermische Verwertung des Synthesegases in einem Gasmotor oder einer Gasturbine so gut wie ausgeschlossen ist.

Aufgabe der Erfindung ist deswegen die Reinigung von Synthesegas von Ammoniak und/oder Schwefelwasserstoff.

Diese Aufgabe wird erfindungsgemäß durch die Merkmale der Ansprüche 1 oder 8 gelöst. Erfindungsgemäß wird Ammoniak und/oder Schwefelwasserstoff mit Wasser in einem Gaswäscher, der kurz auch als Wäscher bezeichnet wird, aus einem Gas oder Gasgemisch, insbesondere dem Synthesegas oder einem Biogas, ausgewaschen. Das Wasser zum Waschen des Gases wird durch Kondensation direkt oder indirekt aus dem zu reinigenden Gas gewonnen. Im Gaswäscher gelangt das Gas in Kontakt mit Wasser, das das Ammoniak und/oder den Schwefelwasserstoff löst und dadurch aus dem Gas entfernt, was als Auswaschen bezeichnet wird. Das Gas kann danach der thermischen Verwertung zugeführt werden. Das Wasser im Gaswäscher wird auch als Waschwasser bezeichnet. Das Wasser kann flüssig oder gasförmig sein, das Gas kann durch ein Wasserbad geleitet werden, das Wasser kann als Tropfen oder Tröpfchen in Luft oder einem anderen Gas verteilt, gelöst oder als Dampf gasförmig sein.

Vorzugsweise sieht die Erfindung für das Auswaschen des Ammoniaks und des Schwefelwasserstoffs einen oder auch mehrere eigenen Gaswäscher vor, die nacheinander vom Gas durchströmt werden, so dass das Gas nacheinander von Ammoniak und Schwefelwasserstoff gereinigt wird. Die Reihenfolge der Reinigung kann auch umgekehrt sein. Auch schließt die Erfindung ein, dass bei getrennten Gaswäschern für das Ammoniak und den Schwefelwasserstoff im Gaswäscher für den Schwefelwasserstoff auch Ammoniak aus dem Gas ausgewaschen wird oder umgekehrt.

Die Erfindung hat den Vorteil dass Gas, beispielsweise Synthesegas, das durch Vergasung insbesondere von Klärschlamm gewonnen worden ist, von den Schadstoffen Ammoniak und Schwefelwasserstoff, evtl. auch von anderen Schadstoffen, gereinigt wird, die beim Auswaschen des Gases vom Waschwasser aufgenommen werden. Die Erfindung verringert eine Umweltbelastung bei thermischer Verwertung des Gases erheblich, ebenso verringert oder vermeidet die Erfindung Korrosionsprobleme in nachgeschalteten Maschinen zur thermischen Verwertung, beispielsweise in einem Gasmotor oder einer Gasturbine. Weiterer Vorteil der Erfindung ist eine Ausgestaltungsmöglichkeit, bei der so gut wie alle Betriebsstoffe für die Reinigung des Gases im Kreislauf geführt werden und zumindest zum Teil bei der Behandlung des Gases anfallen und deswegen nicht von außen zugeführt werden müssen.

In bevorzugter Ausgestaltung weist die Erfindung einen Kondensator auf, der dem Wäscher vorgeschaltet ist, in dem der Schwefelwasserstoff ausgewaschen wird. Das Gas strömt durch den Kondensator und wird so weit abgekühlt, dass im Gas gelöstes Wasser kondensiert. Das Gas weist jedenfalls dann eine hohe Feuchte auf, wenn es vor dem Kondensator zwecks Kondensation von im Gas enthaltenen Teer durch Einspritzen von Wasser gekühlt und/oder zum Filtern durch den zu vergasenden Klärschlamm geleitet wird, aus dem das Gas/Synthesegas Feuchtigkeit aufnimmt und den Klärschlamm dabei trocknet. Ammoniak des Gases ist oder wird teilweise im Wasser gebunden, das aus dem Gas kondensierte Wasser weist einen hohen ph-Wert von beispielsweise 12 bis 13 auf, es hat also alkalische bzw. basische Wirkung. Das durch Kondensation aus dem Gas gewonnene Wasser wird als Waschwasser dem Gaswäscher zugeführt, in dem der Schwefelwasserstoff aus dem Gas ausgewaschen wird. Sofern das Gas im Gaswäscher für den Schwefelwasserstoff noch Ammoniak enthält, wovon ausgegangen werden kann, kann der Ammoniak teilweise im Waschwasser gelöst, d. h. teilweise aus dem Gas ausgewaschen werden. Dadurch erhöht sich der ph-Wert des Waschwassers im Gaswäscher zum Auswaschen des Schwefelwasserstoffs weiter. Die Lösung des Ammoniaks im Waschwasser ist abhängig von dessen ph-Wert. Durch den hohen ph-Wert des Waschwassers weist der Schwefelwasserstoff eine gute Wasserlöslichkeit auf, die Reinigungswirkung des Gases von Schwefelwasserstoff ist gut.

Das Waschwasser des Gaswäschers zum Auswaschen des Schwefelwasserstoffs aus dem Gas wird vorzugsweise im Kreis geführt (rezirkuliert). Da das Gas Wasser aufnimmt, wenn es beispielsweise zum Filtern durch zu vergasenden Klärschlamm geleitet wird, gelangt ständig zusätzliches Wasser in das Gas, das zur Gewinnung von Waschwasser kondensiert wird. Es muss deswegen normalerweise kein Waschwasser zugeführt, sondern überschüssiges Wasser beispielsweise durch einen Überlauf abgelassen werden. Das überschüssige Waschwasser kann dem Zulauf einer Kläranlage zugeführt werden, deren Klärschlamm zur Gewinnung des Gases vergast wird. Da einem Klärwerk zufließendes, zu klärendes Wasser üblicherweise einen niedrigen ph-Wert aufweist, schadet ein hoher ph-Wert des überschüssigen Waschwasser aus dem Gaswäscher nicht sondern ist im Gegenteil erwünscht. Im Waschwasser enthaltenes Ammoniak wird zudem biologisch abgebaut.

Um den aus dem Gas ausgewaschenen Schwefelwasserstoff aus dem Waschwasser zu entfernen sieht eine Ausgestaltung der Erfindung ein Ausfällen des Schwefelwasserstoffs aus dem Waschwasser mit einem Fällmittel vor. Das Fällmittel reagiert chemisch mit dem Schwefelwasserstoff, es bindet den Schwefelwasserstoff und setzt sich im Fuß des Gaswäschers ab. Die Ausfällung wird von Zeit zu Zeit oder kontinuierlich abgezogen oder in anderer Weise entfernt. Es ist auch denkbar, den Schwefelwasserstoff außerhalb des Gaswäschers aus dem Waschwasser auszufällen und zu entfernen. Als Fällmittel eignen sich zwei- und dreiwertige Eisensalze, also Eisen(II)- und Eisen(III)-chloride und -sulfate, wobei die Erfindung nicht auf eines dieser Fällmittel beschränkt ist. Das Fällmittel ist an sich die einzige Substanz, die zur erfindungsgemäßen Reinigung des Synthesegas von außen zugeführt und wieder entfernt werden muss.

Zum Auswaschen des Ammoniaks aus dem Gas wird vorzugsweise Wasser mit einem ph-Wert von 7 oder kleiner, also von Wasser mit neutraler oder saurer Wirkung als Waschwasser verwendet. Es kann gewöhnliches Brauchwasser/Leitungswasser ohne besondere Qualitätskriterien als Waschwasser zum Auswaschen des Ammoniaks aus dem Gas verwendet werden. Auch das Waschwasser zum Auswaschen des Ammoniaks wird vorzugsweise im Kreis geführt (rezirkuliert). Überschüssiges Waschwasser wird abgeführt, es tritt beispielsweise durch einen Überlauf aus dem Gaswäscher zum Auswaschen des Ammoniaks aus dem Gas aus. Ammoniak ist sehr gut wasserlöslich, jedenfalls wenn das Waschwasser keinen hohen ph-Wert von deutlich über 7 aufweist. Die Reinigungswirkung des Gases von Ammoniak ist deswegen gut. Das überschüssige Waschwasser aus dem Gaswäscher zum Auswaschen des Ammoniaks aus dem Gas kann wie das Waschwasser aus dem Gaswäscher zum Auswaschen des Schwefelwasserstoffs aus dem Gas einem Zulauf einer Kläranlage zugeführt werden.

Grundsätzlich ist die Reihenfolge der Reinigung des Gas egal, es kann zuerst das Ammoniak und danach der Schwefelwasserstoff ausgewaschen werden, wobei vorzugsweise zum Auswaschen des Schwefelwasserstoffs das durch Kondensation aus dem Gas gewonnene Wasser als Waschwasser wegen dessen hohen ph-Werts verwendet wird. Vorzugsweise wird zuerst der Schwefelwasserstoff und danach das (Rest-)Ammoniak aus dem Gas ausgewaschen. Der Grund dafür ist, dass ein Teil des nach der Kondensation noch im Gas enthaltenen Ammoniaks mit dem Waschwasser im Gaswäscher zum Auswaschen des Schwefelwasserstoffs gelöst, d. h. mit ausgewaschen wird, wenn der ph-Wert des Waschwassers nicht zu hoch ist. Das im Gaswäscher zum Auswaschen des Schwefelwasserstoffs aus dem Gas mit ausgewaschenem Ammoniak erhöht den ph-Wert des Waschwassers, wodurch sich die Reinigungs- und Waschwirkung für den Schwefelwasserstoff erhöht. Durch eine Kreisführung (Rezirkulation) des Waschwassers erhöht sich der ph-Wert weiter und verbessert die Reinigungswirkung beim Auswaschen des Schwefelwasserstoffs. Das nach dem Auswaschen des Schwefelwasserstoffs noch im Gas verbliebene Ammoniak wird im nachgeschalteten Gaswäscher ausgewaschen, dessen Waschwasser einen ph-Wert von 7 oder kleiner aufweist.

Vorzugsweise wird das Gas von Teer gereinigt bevor es dem Kondensator zur Gewinnung des Waschwassers und dem oder den Gaswäschern zur Reinigung von Ammoniak und Schwefelwasserstoff zugeführt wird. Dazu wird das Gas gemäß einer Ausgestaltung der Erfindung mit Wasser auf eine Temperatur gekühlt, bei der der im Gas enthaltene Teer kondensiert und das Wasser sich im Gas löst und gelöst bleibt. Zur Reinigung wird das Gas durch zu vergasenden Klärschlamm durchgeleitet, der als Filter wirkt und den Teer aus dem Gas filtert. Durch die Reinigung des Gas von Teer werden nachgeschaltete Anlagenteile, nämlich der Kondensator und der oder die Gaswäscher nicht mit Teer beaufschlagt und verunreinigt.

Die Erfindung ist zur Reinigung von Synthesegas vorgesehen, das durch Vergasung von Klärschlamm gewonnen worden ist. Trotzdem eignet sich die Erfindung auch zur Reinigung brennbarer Gase/Synthesegase, die durch Vergasung anderen vergasbaren Guts als Klärschlamm wie beispielsweise sonstige Biomasse gewonnen worden ist. Auch andere als durch Vergasung gewonnene Gase lassen sich mit dem erfindungsgemäßen Verfahren und der erfindungsgemäßen Anlage von Ammoniak und/oder Schwefelwasserstoff reinigen. Die Gase können beispielsweise durch thermische oder biologische Verwertung wie beispielsweise die genannte Vergasung, durch Pyrolyse oder Vergärung, gewonnen werden.

Die Erfindung wird nachfolgend anhand eines in der Zeichnung dargestellten Ausführungsbeispiels näher erläutert. Als Beispiel ist die Vergasung von Klärschlamm und die Reinigung des dadurch gewonnenen, brennbaren Synthesegases gewählt worden, auf die sich die Erfindung insbesondere bezieht. Die Erfindung ist allerdings nicht auf diese Anwendung beschränkt sondern eignet sich auch zur Reinigung anderer Gase, die insbesondere durch thermische oder biologische Verwertung gewonnen werden. Die beiden Figuren zeigen ein Anlagenschema einer erfindungsgemäßen Anlage, wobei
- Figur 1: einen Gasgewinnungsteil mit Teerrückführung, und
- Figur 2: einen Anlageteil zur Reinigung von Synthesegas gemäß der Erfin- dung zeigt.

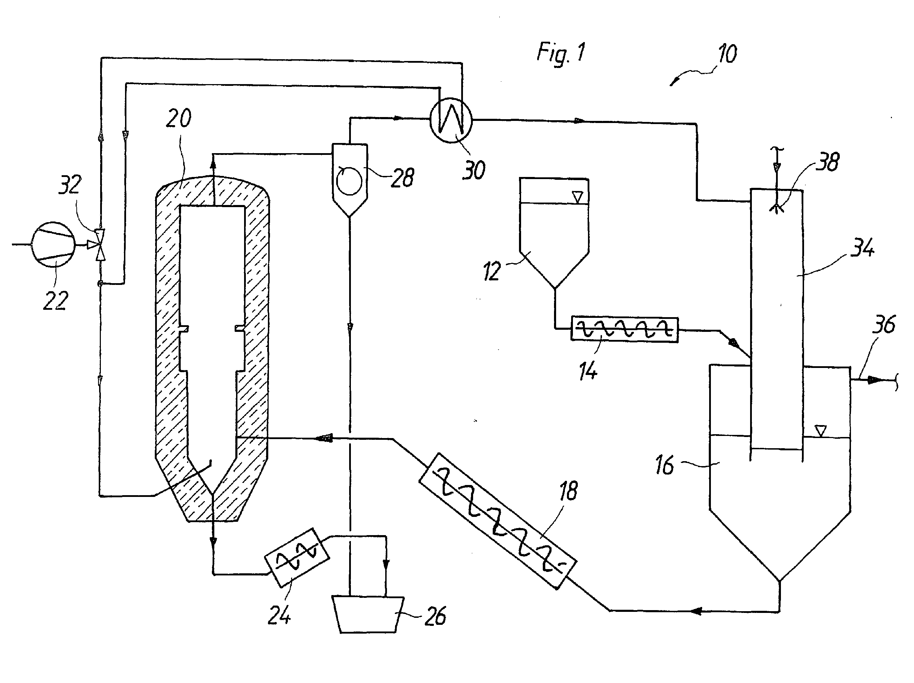

Die Figuren sind als vereinfachte, schematisierte Darstellungen zu verstehen. Die in Figur 1 dargestellte, erfindungsgemäße Anlage 10 dient zur Gewinnung von brennbarem Gas aus Klärschlamm. Das durch Vergasung gewonnene, brennbare Gas wird nachfolgend als Synthesegas bezeichnet. Der zu vergasende Klärschlamm wird als getrocknetes Klärschlamm-Granulat in einem Klärschlammvorlagesilo 12 gelagert. Aus dem Klärschlammvorlagesilo 12 wird das Klärschlamm-Granulat mit einem Schneckenförderer 14 einem Klärschlammbehälter 16 zugeführt. Mit einem weiteren Schneckenförderer 18 wird das Klärschlamm-Granulat aus dem Klärschlammbehälter 16 in einen Vergaser 20 gefördert, wo das Klärschlamm-Granulat vergast wird. Die Vergasung erfolgt in beispielsweise von der Holzvergasung her an sich bekannter Weise. Der Vergaser 20 ist als sog. Wirbelschichtvergaser aufgebaut, dem das Klärschlamm-Granulat in seinem unterem Bereich zugeführt wird. Die zur Vergasung notwendige Luft liefert ein Gebläse 22, das die Luft von unten in den Vergaser 20 einbläst und dadurch die Wirbelschicht erzeugt. Das Klärschlamm-Granulat wird unter Luftmangel thermisch zu einem brennbaren Gas oder Gasgemisch, dem Synthesegas, zersetzt.

Thermisch nicht zersetzbare Bestandteile (Asche) des Klärschlamm-Granulats fallen nach unten aus dem Vergaser 20 aus und werden mit einem Schneckenförderer 24 in einen Aschebunker 26 gefördert.

Das brennbare Synthesegas tritt oben aus dem Vergaser 20 aus und wird zunächst einem Zyklonabscheider 28 zugeführt, in dem Staubteilchen abgeschieden werden. Die abgeschiedenen Staubteilchen werden ebenfalls in den Aschebunker 26 geleitet. Aus dem Zyklonabscheider 28 gelangt das durch die thermische Zersetzung gewonnene Synthesegas in einen Kühler (Rekuperator) 30, in dem es auf eine Temperatur von beispielsweise 770° C gekühlt wird. Am Austritt aus dem Vergaser 20 hat das Gas eine Temperatur von beispielsweise ca. 1 100° C. Die Kühlung des brennbaren Gases im Rekuperator 30 erfolgt mit Luft, und zwar mit der Luft, die vom Gebläse 22 angesaugt und dem Vergaser 20 zur thermischen Zersetzung des Klärschlamm-Granulats zugeführt wird. Die dem Vergaser 20 zugeführte Luft wird auf diese Weise im Rekuperator 30 vorgewärmt. Mit einem Dreiwegehahn 32 kann die vom Gebläse 22 angesaugte Luft wahlweise zunächst durch den Rekuperator 30 leitet werden, bevor sie in den Vergaser 20 gelangt, oder die Luft kann unmittelbar vom Gebläse 22 dem Vergaser 20 zugeführt werden. Auch kann mit dem Dreiwegehahn 32 ein Teil der vom Gebläse 22 angesaugten Luft dem Rekuperator 30 und der übrige Teil der angesaugten Luft dem Vergaser 20 unmittelbar zugeführt werden. Dadurch kann das Verhältnis der durch den Rekuperator 30 dem Vergaser 20 zugeführten Luft zur dem Vergaser 20 unmittelbar zugeführten Luft und auf diese Weise die Kühlleistung des Rekuperators 30 und damit die Austrittstemperatur des im Vergaser 20 gewonnenen Synthesegases am Austritt aus dem Rekuperator 30 eingestellt werden.

Nach dem Rekuperator 30 wird das durch die thermische Zersetzung gewonnene Synthesegas dem Klärschlammbehälter 16 zugeführt. Der Klärschlammbehälter 16 weist einen Gaskühler 34 auf, der im dargestellten und beschriebenen Ausführungsbeispiel rohrförmig und stehend ausgebildet ist. Der Gaskühler 34 taucht in das im Klärschlammbehälter 16 enthaltene Klärschlamm-Granulat ein, so dass das dem Gaskühler 34 im oberen Bereich zugeführte Synthesegas zwangsweise durch das Klärschlamm-Granulat durchtreten muss, bevor es an einem Gasauslaß 36 aus dem Klärschlammbehälter 16 austritt.

Zur Kühlung des Synthesegases wird Wasser durch eine oder mehrere Wasserdüsen 38 in den Gaskühler 34 eingespritzt. Das Waser ist vorzugsweise demineralisiert. Das eingespritzte Wasser kühlt das Synthesegas und wird im Synthesegas gelöst. Es wird soviel Wasser in den Gaskühler 34 eingespritzt, dass das Synthesegas am Gasaustritt 36 aus dem Klärschlammbehälter 16 eine Temperatur von beispielsweise 120° hat, so dass das Wasser im Synthesegas gelöst bleibt. Durch die Kühlung des Synthesegases im Gaskühler 34 kondensiert im gewonnen Synthesegas enthaltener Teer und wird in dem im Klärschlammbehälter 16 enthaltenen Klärschlamm-Granulat, durch das das Synthesegas durchgeleitet wird, ausgefiltert. Der Klärschlammbehälter 16 bildet somit einen Filter, das Klärschlamm-Granulat ein Filtermittel, mit dem im durch die thermische Zersetzung gewonnenen Synthesegas enthaltener Teer aus dem Synthesegas gefiltert wird.

Gemeinsam mit dem Klärschlamm-Granulat wird der ausgefilterte Teer dem Vergaser 20 zugeführt. Im Vergaser 20 wird der Teer verbrannt und erhöht dadurch einen Wirkungsgrad des Vergasers 20 und/oder der Teer wird thermisch zu brennbarem Synthesegas zersetzt und tritt mit dem durch die thermische Zersetzung des Klärschlamm-Granulats gewonnenen brennbaren Gas aus dem Vergaser 20 aus. Die erfindungsgemäße Anlage 10 zur Gewinnung von Synthesegas aus Klärschlamm weist somit eine Teerrückführung auf, sie hat den Vorteil, dass der bei der thermischen Zersetzung des Klärschlamms anfallende Teer nicht abgeschieden und entsorgt werden muss und trotzdem das Synthesegas nicht belastet.

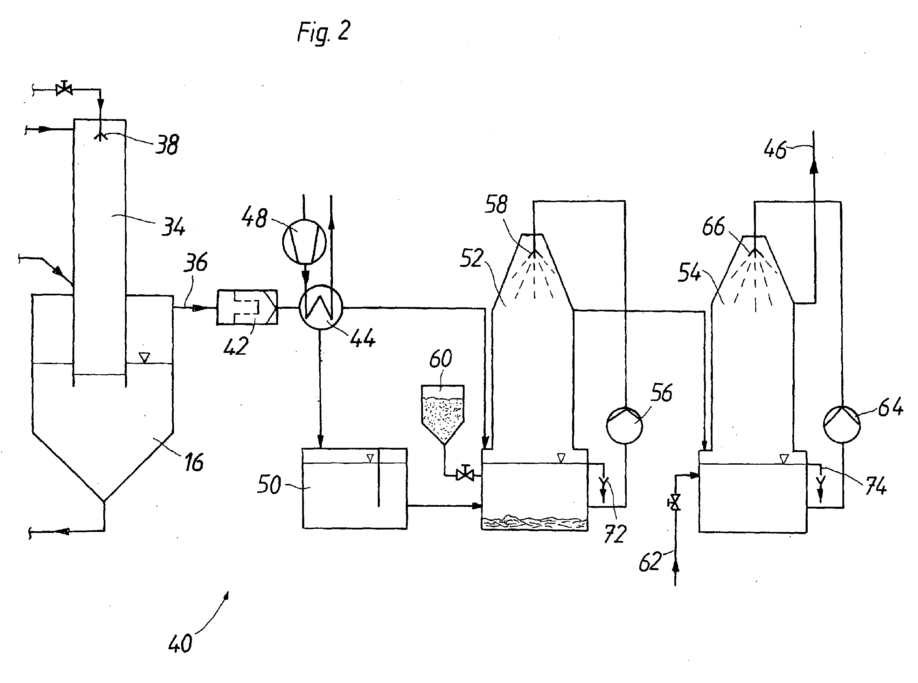

Zur Reinigung des Synthesegases weist die erfindungsgemäße Anlage 10 den in Figur 2 dargestellten Wasserkreislauf 40 auf. Das in den Gaskühler 34 eingespritzte Wasser wird im Synthesegas gelöst und tritt im Synthesegas gelöst am Gasaustritt 36 aus dem Klärschlammbehälter 16 aus, nachdem es durch das im Klärschlammbehälter 16 enthaltene Klärschlamm-Granulat durchgeleitet worden ist. Wie bereits erwähnt hat das Synthesegas am Gasaustritt 36 aus dem Klärschlammbehälter 16 eine Temperatur von beispielsweise 120° C., also eine Temperatur, bei der das in den Gaskühler 34 eingespritzte Wasser im Synthesegas gelöst bleibt. Bei der Durchleitung des Synthesegases durch das im Klärschlammbehälter 16 enthaltene Klärschlamm-Granulat nimmt das Synthesegas zusätzlich Wasser auf, das im Klärschlamm-Granulat als Feuchte enthalten ist. Das mit der thermischen Zersetzung gewonnene Synthesegas trocknet das im Klärschlammbehälter 16 enthaltene Klärschlamm-Granulat beim Durchtritt.

Nach dem Austritt aus dem Klärschlammbehälter 16 wird das Synthesegas durch ein Filter 42 und anschließend durch einen Kondensator 44 und durch zwei Wäscher 52, 54, geleitet, in denen es gereinigt wird. Nach dem zweiten Wäscher 54 wird das Synthesegas einer Verwertung (bei 46) zugeführt. Das Synthesegas kann beispielsweise zur Stromerzeugung einem nicht dargestellten Gasmotor oder zur Wärmeerzeugung einem nicht dargestellten Gasbrenner zugeführt werden.

Eine Kühlung des Kondensators 44 erfolgt mit Luft, die dem Kondensator 44 von einem Gebläse 48 zugeführt wird. Das im Synthesegas gelöste Wasser kondensiert im Kondensator 44 und wird einem Ölsabscheider 50 zugeleitet. Der Kondensator 44 scheidet also das im Synthesegas gelöste Wasser ab, er bildet einen Wasserabscheider 44.

Aus dem Ölabscheider 50 wird das aus dem Synthesegas abgeschiedene Wasser dem ersten der beiden Wäscher 52 zugeführt, es sammelt sich in dessen Fuß oder Sumpf. Eine Pumpe 56 fördert das Wasser aus dem Fuß nach oben in einen Kopf des Wäschers 52, wo es durch eine oder mehrere Düsen 58 in den Wäscher 52 gespritzt wird. Auf einer Kontaktstrecke zwischen dem Kopf und dem Fuß des Wäschers 52 gelangt das Wasser in Kontakt mit dem Synthesegas aus dem Kondensator 44, das im Fußbereich in den Wäscher 52 eintritt, die Kontaktstrecke dem eingespritzten Wasser entgegen von unten nach oben durchströmt und am Kopf aus dem Wäscher 52 austritt.

Das im Kondensator 44 kondensierte und aus dem Synthesegas abgeschiedene Wasser enthält üblicherweise Ammoniak und weist üblicherweise einen hohen ph-Wert auf, wirkt also alkalisch bzw. basisch. Aufgrund des hohen ph-Werts löst das Wasser im Wäscher 52 Schwefelwasserstoff aus dem Synthesegas, der Schwefelwasserstoff wird aus dem Synthesegas ausgewaschen bzw. das Synthesegas wird von Schwefelwasserstoff gereinigt. Ist der ph-Wert des auch als Waschwasser zu bezeichnenden, in den Wäscher 52 eingespritzten Wassers nicht zu hoch, wird auch Ammoniak aus dem Synthesegas im Wasser gelöst und erhöht dessen ph-Wert, so dass das Wasser im ersten Wäscher 52 einen ph-Wert von beispielsweise 12 bis 13 aufweist. Durch den hohen ph-Wert des Waschwassers im ersten Wäscher 52 ist der Schwefelwasserstoff gut löslich und der Wäscher 52 weist eine gute Reinigungswirkung auf.

Im Fuß des Wäschers 52 wird der Schwefelwasserstoff aus dem auch als Waschwasser zu bezeichnenden Wasser ausgefällt. Das Fällmittel ist in einem Silo 60 bevorratet, aus dem es bei Bedarf dem Fuß des Wäschers 52 zugeführt, wird. Als Fällmittel können beispielsweise zwei- und dreiwertige Salze des Eisens verwendet werden, beispielsweise Eisen(II)-chlorid (FeCl₂), Eisen(II)-sulfat (Fe-SO₄), Eisen(III)-chlorid (FeCl₃) oder Eisen(III)-chloridsulfat (FeClSO₄). Das Fällmittel ist die an sich einzige Fremdsubstanz, die zur erfindungsgemäßen Reinigung von Synthesegas von außen zugeführt werden muss und nicht im Kreis geführt wird. Das Fällmittel wird von Zeit zu Zeit oder kontinuierlich aus dem Fuß des Wäschers 52 abgezogen, also entfernt.

Aus dem Kopf des ersten Wäschers 52 wird das Synthesegas dem zweiten Wäscher 54 in dessen Fuß zugeführt. Es durchströmt wieder eine Kontaktstrecke vom Fuß zum Kopf des Wäschers 54, also von unten nach oben, und tritt am Kopf aus dem Wäscher 54 aus. Dem zweiten Wäscher 54 wird Wasser, beispielsweise Brauchwasser durch eine Leitung 58 in dessen Fuß zugeführt. Das auch hier wieder als Waschwasser zu bezeichnende Wasser im zweiten Wäscher 54 hat einen ph-Wert von 7 oder kleiner, d. h. es wirkt neutral oder sauer. Eine Pumpe 64 fördert das Wasser vom Fuß des zweiten Wäschers 54 in dessen Kopf, wo es durch eine oder mehrere Düsen 66 eingespritzt wird. Aufgrund des ph-Werts von 7 oder kleiner löst das Wasser im zweiten Wäscher 54 Ammoniak aus dem Synthesegas, soweit es nicht bereits im ersten Wäscher 52 gelöst und ausgewaschen worden ist. Das nach dem ersten Wäscher 52 im Synthesegas noch enthaltene und dem zweiten Wäscher 54 zugeführte Ammoniak kann auch als Restammoniak bezeichnet werden. Es wird wie gesagt im zweiten Wäscher 54 aus dem Synthesegas ausgewaschen, d. h. das Synthesegas wird von Ammoniak gereinigt. Das gereinigte Synthesegas tritt am Kopf aus dem zweiten Wäscher 54 aus und wird seiner Verwertung (bei 46) zugeführt.

Das Waschwasser beider Wäscher 52, 54 wird wie beschrieben im Kreislauf geführt (rezirkuliert), es wird mit der Pumpe 56, 64 aus dem Fuß des Wäschers 52, 54 angesaugt und im Kopf durch die Düse/n 58, 66 wieder in den Wäscher 52, 54 eingespritzt, von wo es durch die Kontaktstrecke wieder nach unten in den Fuß des Wäschers 52, 54 strömt. Durch die Rezirkulation löst das Waschwasser im ersten Wäscher 52 zusätzlich Ammoniak und erhöht dadurch seinen pH-Wert, wodurch seine Reinigungswirkung für den Schwefelwasserstoff steigt.

Im Gaskühler 34 wird das durch die Düse 38 eingespritzte Wasser wie bereits beschrieben im Synthesegas gelöst, das im Vergaser 20 durch Vergasung des Klärschlamm-Granulats gewonnen worden ist. Aus dem Klärschlammbehälter 16 gelangt das Synthesegas mit dem gelösten Wasser in den Kondensator 44, wo das gelöste Wasser kondensiert und abgeschieden wird. Aus dem Kondensator 44 strömt wie beschrieben das Synthesegas in den ersten Wäscher 52 und das abgeschiedene Wasser gelangt getrennt vom Synthesegas zuerst in den Ölabscheider 50 und aus diesem in den Fuß des ersten Wäschers 52.

Durch Überläufe 72, 74, an den Füßen der Wäscher 52, 54 tritt überschüssiges Wasser aus. Es kann einem Zulauf einer Kläranlage zugeführt werden, deren Klärschlamm beispielsweise mit der erfindungsgemäßen Anlage vergast und das Synthesegas gereinigt wird. Im Wasser gelöstes Ammoniak wird in der Kläranlage biologisch abgebaut. Da Klärwerken zufließendes, zu klärendes Wasser üblicherweise einen niedrigen ph-Wert von weniger als 7 aufweist, schadet ein hoher ph-Wert von über 7 im Wasser aus den Überläufen 72, 74 der Wäscher 52, 54 nicht. Auch sind die Wassermengen gering.

Da das Synthesegas zur Reinigung von Teer durch das Klärschlamm-Granulat im Klärschlammbehälter 16 durchgeleitet wird und dort Feuchtigkeit aufnimmt, wird dem Wasser im Wasserkreislauf 40 Wasser zugeführt, das letzten Endes durch die Überläufe 72, 74 der Wäscher 52, 54 austritt. Sollte Wasser im Wasserkreislauf 40 fehlen, kann es durch die Leitung 62 nachgefüllt werden, die zum Fuß des zweiten Wäschers 54 führt.

## Patentansprüche

1. Verfahren zur Reinigung von Gas, , **dadurch gekennzeichnet, dass** Ammoniak und/oder Schwefelwasserstoff mit Kondensat, welches direkt oder indirekt aus dem Gas gewonnen wird, ausgewaschen wird.

2. Verfahren nach Anspruch 1, **dadurch gekennzeichnet, dass** der Schwefelwasserstoff mit kondensiertem Wasser ausgewaschen wird, das aus dem feuchten Gas durch Kondensation gewonnen worden ist und alkalisierende Substanzen wie beispielsweise Ammoniak enthält, die aus dem Gas stammen.

3. Verfahren nach Anspruch 1 oder 2, **dadurch gekennzeichnet, dass** das Gas Synthesegas ist, das durch thermische Verwertung Biostoffen gewonnen worden ist.

4. Verfahren nach einem der Ansprüche 1 bis 3, **dadurch gekennzeichnet, dass** nach dem Auswaschen des Schwefelwasserstoffs aus dem Synthesegas der Schwefelwasserstoff mit einem Fällmittel aus dem Waschwasser ausgefällt wird.

5. Verfahren nach einem der Ansprüche 1 bis 4, **dadurch gekennzeichnet, dass** das Ammoniak nach dem Schwefelwasserstoff aus dem Synthesegas ausgewaschen wird.

6. Verfahren nach einem der vorhergehenden Ansprüche, **dadurch gekennzeichnet, dass** das Waschwasser im Kreislauf geführt wird.

7. Verfahren nach einem der vorhergehenden Ansprüche, **dadurch gekennzeichnet, dass** das Synthesegas mit Wasser gekühlt und/oder zur Reinigung durch Klärschlamm durchgeleitet wird bevor das Ammoniak und/oder der Schwefelwasserstoff aus dem Synthesegas ausgewaschen wird.

8. Anlage zur Reinigung von Gas, **dadurch gekennzeichnet, dass** die Anlage (10) einen Gaswäscher (52, 54) aufweist, in dem Ammoniak und/oder Schwefelwasserstoff mit Wasser aus dem Gas ausgewaschen wird.

9. Anlage nach Anspruch 8, **dadurch gekennzeichnet, dass** die Anlage (10) einen Gaswäscher (52) zum Auswaschen des Schwefelwasserstoffs und einen Gaswäscher (54) zum Auswaschen des Ammoniaks aus dem Synthesegas aufweist.

10. Anlage nach Anspruch 8 oder 9, **dadurch gekennzeichnet, dass** die Anlage (10) einen Kondensator (44) aufweist, der dem Gaswäscher (52, 54) vorgeschaltet ist und in dem das Synthesegas getrocknet wird, bevor es durch den Gaswäscher (52, 54) geleitet wird, und dass zum Auswaschen des Schwefelwasserstoffs aus dem Synthesegas kondensiertes Wasser aus dem Kondensator (44) dem Gaswäscher (52) zugeführt wird.

11. Anlage nach einem der Ansprüche 8 bis 10, **dadurch gekennzeichnet, dass** die Anlage (10) einen Vergaser (20) zur Gewinnung des Synthesegases aufweist.

12. Anlage nach einem der Ansprüche 8 bis 11, **dadurch gekennzeichnet, dass** die Anlage (10) einen Wasserkühler (34) aufweist, der dem Gaswäscher (52, 54) vorgeschaltet ist und in dem dem Synthesegas Wasser zur Kühlung zugeführt wird, bevor im Gaswäscher (52, 54) das Ammoniak und/oder der Schwefelwasserstoff ausgewaschen wird.

13. Anlage nach einem der Ansprüche 8 bis 12, **dadurch gekennzeichnet, dass** die Anlage (10) einen Klärschlammbehälter 16 aufweist, der dem Gaswäscher (52, 54) vorgeschaltet ist und durch den das Synthesegas geleitet wird, bevor es dem Gaswäscher (52, 54) zum Auswaschen des Ammoniaks und/oder des Schwefelwasserstoffs zugeführt wird, und dass der Klärschlammbehälter (16) eine Gasführung aufweist, die das Synthesegas durch im Klärschlammbehälter (16) befindlichen Klärschlamm leitet, wenn es durch den Klärschlämmbehälter (16) strömt.
